# DEMANDE DE BREVET EUROPEEN

(11) **EP 1 586 476 A1**
(43) Date de publication de la demande: **19.10.2005**
(21) Numéro de dépôt: 05290718.5
(22) Date de dépôt: 01.04.2005
(51) Int. Cl.: B60J 10/00, B60J 10/08

(54) **Nouveau profilé formant prince, en élastomère ou en plastomère, apte à coiffer une partie saillante d'une carrosserie d'un véhicule automobile**

(30) Priorité: 14.04.2004 FR 0403882
(71) Demandeur: Metzeler Automotive Profile Systems Transieres, 92000 Nanterre (FR)
(72) Inventeur: Vinceneux, Nicolas, 76520 Franquevelle (FR)
(74) Mandataire: Jolly, Jean-Pierre

(57) **Abrégé**

Ce profilé extrudé (1) ou non comporte sur sa surface intérieure de préférence une succession d'ondulations (5) se traduisant par une variation locale de l'épaisseur du profilé en U ou Q.

## Description

La présente invention concerne un nouveau profilé formant pince, en élastomère ou en plastomère, apte à coiffer une partie saillante d'une carrosserie d'un véhicule automobile. L'invention concerne également les joints d'étanchéité pour ouvrants de véhicule automobile comportant un tel profilé formant pince.

De nombreux joints d'étanchéité pour véhicule automobile comprennent habituellement une partie formant pince, à section en U ou en Ω, destinée à coiffer une partie saillante de la carrosserie à équiper de ce joint. Ce joint peut être un joint de porte, de coffre, de hayon ou similaire.

Ces profilés formant pince doivent presser fermement la feuillure qu'ils équipent, afin de ne pas risquer de s'en désolidariser dans les conditions d'utilisation du véhicule et, dans ce but, ils comprennent habituellement une armature rigide, noyée dans l'élastomère ou le plastomère dont ils sont constitués. De très nombreuses formes de réalisation de telles armatures ont été proposées dans la technique, en métal ou en matière plastique, et elles sont d'un emploi usuel dans la fabrication de ces joints d'étanchéité formant pinces. Elles présentent toutefois l'inconvénient d'accroître le poids des profilés qu'elles équipent et de majorer de façon sensible leur coût de fabrication.

La présente invention vise à remédier à ces inconvénients en proposant de nouveaux profilés formant pince du type qui vient d'être évoqué, mais dépourvus d'armature de renfort.

A cet effet, l'invention a pour objet un profilé extrudé formant pince en au moins un élastomère ou un plastomère, à section transversale en U ou en Ω, caractérisé en ce qu'il est dépourvu d'armature de renfort et en ce que sa surface externe ou, de préférence, interne présente, en coupe longitudinale, aussi bien à la base du U ou de l' Ω que sur au moins une partie des branches de celui-ci, une succession plus ou moins régulière d'ondulations ou de motifs géométriques se traduisant par une variation locale répétée de l'épaisseur de ce profilé.

Il est clair que les ondulations seront ménagées de préférence sur la surface interne du U ou de l' Ω, mais elles peuvent être aussi réalisées dans le même but sur sa surface externe, mais avec alors un aspect moins agréable au regard.

Du fait de ces ondulations ou de ces motifs géométriques répétés, le profilé est rigidifié de façon très appréciable, à la manière des tuyaux cannelés ou des parties dites "cannelures" des cartons ondulés, sans qu'il soit nécessaire d'incorporer une armature de renfort dans l'élastomère ou dans le plastomère dont est constitué ce profilé, tout en lui conservant une souplesse satisfaisante que n'aurait pas un profilé d'épaisseur constante, même réduite.

Cet élastomère ou ce plastomère sera de préférence dur et sa dureté sera avantageusement comprise entre 75 et 95 Shore A.

Les profilés conformes à l'invention peuvent être fabriqués de façon simple :
- par extrusion, en commandant le mouvement de parties mobiles de la filière ou du poinçon, de manière à faire onduler au moins une partie de l'extrudat et à imprimer localement à la matière extrudée une vitesse en sortie de filière supérieure à la vitesse de défilement du profilé sur la ligne d'extrusion, ceci étant plus particulièrement valable dans le cas de profilés en deux matériaux coextrudés ;
- ou par moulage de pièces relativement courtes en un ou deux matériaux ;
- ou encore en utilisant un outil de grainage profond motorisé, disposé de préférence juste à la filière d'extrusion, le profilé étant extrudé dans ce but largement ouvert.

Le fait de réaliser ces profilés sans armature facilite le recyclage du matériau dont ils sont constitués et les allège de façon très sensible.

En outre, le profilé est facilement compressible pour sa mise en place sur la partie saillante de la carrosserie de véhicule qu'il est destiné à équiper et sa mise en place peut s'effectuer sans assistance mécanique.

Il n'en est pas moins très résistant à l'ouverture de la pince et il reste ainsi parfaitement solidaire, au cours du temps, de la feuillure qu'il équipe.

Enfin, du fait de sa géométrie, le profilé épouse en outre facilement les parties incurvées de la feuillure qu'il coiffe, sans qu'il soit nécessaire d'avoir recours à des opérations annexes de mise en forme comme un conformage à chaud ou un moulage.

D'autres caractéristiques et avantages de l'invention ressortiront de la description qui va suivre de formes de mise en oeuvre de l'invention. Dans cette description, on se réfèrera aux dessins schématiques annexés, sur lesquels :
La figure 1 est une coupe transversale partielle d'un premier profilé formant pince conforme à l'invention, suivant la ligne 1-1 de la figure 2 ;
La figure 2 est une vue en élévation latérale du profilé de la figure 1, avec coupe partielle suivant la ligne II-II de cette figure ;
La figure 3 est une vue analogue à la figure 1 d'un second profilé conforme à l'invention, en coupe suivant la ligne III-III de la figure 4 ;
La figure 4 est une vue analogue à la figure 2 du profilé de la figure 3, avec coupe partielle suivant la ligne IV-IV de cette figure.

Les figures 5 et 6 sont des coupes transversales de deux joints d'étanchéité pour ouvrants d'automobile comportant un profilé formant pince du type de celui des figures 3 et 4.

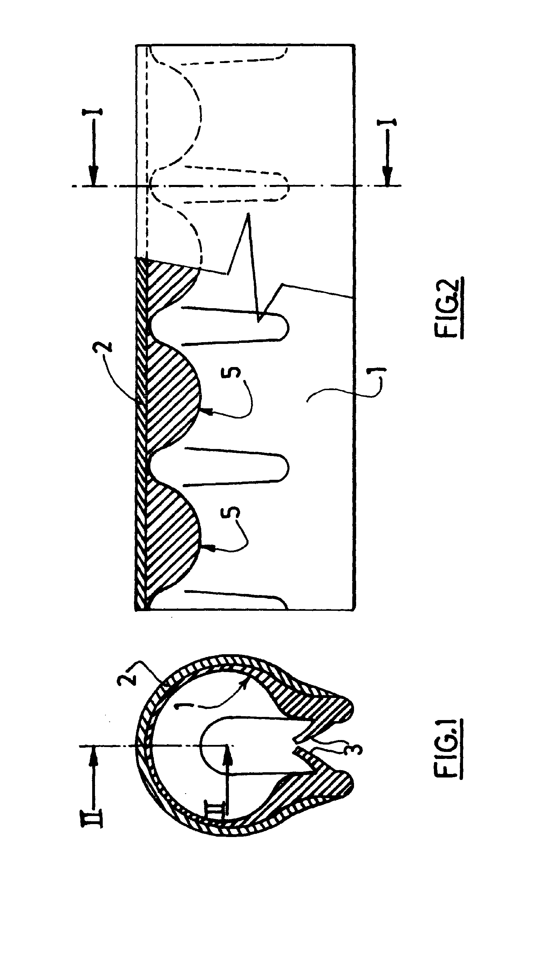

On se référera d'abord aux figures 1 et 2.

Ces figures représentent un profilé extrudé 1 en caoutchouc ou en un matériau thermoplastique relativement dur (de 75 à 95 Shore A), à section transversale en forme de Ω, revêtu extérieurement d'une couche 2 d'environ 0,6 à 1 mm d'épaisseur, en caoutchouc ou en un matériau thermoplastique généralement plus souple que celui du profilé 1, ayant par exemple une dureté de 65 à 80 Shore A. Ce profilé est représenté ici schématiquement et comportant deux lèvres 3, faisant respectivement saillie à l'intérieur du profilé à partir de chacune des branches de l' Ω en direction de l'autre branche, afin de prévenir, de façon connue en soi, toute désolidarisation intempestive du profilé 1 et de la partie saillante de la carrosserie qu'il est appelé à coiffer.

Conformément à l'invention, le profilé 1 est dépourvu d'une armature rigide noyée dans la masse du caoutchouc, mais, pour qu'il présente néanmoins une rigidité suffisante, il présente sur sa face interne, aussi bien au niveau de la partie de l' Ω opposée aux extrémités des branches de celui-ci que sur la plus grande partie de ces branches, une succession plus ou moins régulière d'ondulations 5, se répétant longitudinalement avec un pas qui dépend des dimensions du profilé, mais qui est en général compris entre 2 et 8 mm.

L'épaisseur de la partie variable du caoutchouc au-dessous de la peau varie ainsi de façon assez régulière entre 0 et 3 mm et l'amplitude de l'ondulation entre 1 et 4 mm. L'amplitude est définie comme la hauteur de l'ondulation et le pas comme la distance entre deux parties creuses successives, à la base du U ou de l'Ω, où ces valeurs sont généralement les plus fortes.

Ainsi qu'il a été exposé ci-dessus, cette succession d'ondulations 5 se traduit par un accroissement très sensible de la rigidité du profilé 1, par rapport à un profilé analogue sans armature d'épaisseur constante et sensiblement égale à l'amplitude maximum des ondulations, tout en ayant une souplesse proche de celle d'un profilé d'épaisseur constante et sensiblement égale à celle correspondant aux parties creuses des ondulations.

Loin de compliquer la mise en place du profilé sur la feuillure de la carrosserie qu'il est destiné à coiffer, ces ondulations se prêtent parfaitement à une telle mise en place, sans assistance mécanique et sans conformage à chaud, ni moulages, même sur les parties fortement incurvées de la feuillure.

On notera en outre que les ondulations du profilé acceptent mieux les dilatations thermiques de celui-ci dues à l'ensoleillement et ses retraits éventuels résultant de l'extrusion ou de basses températures ambiantes.

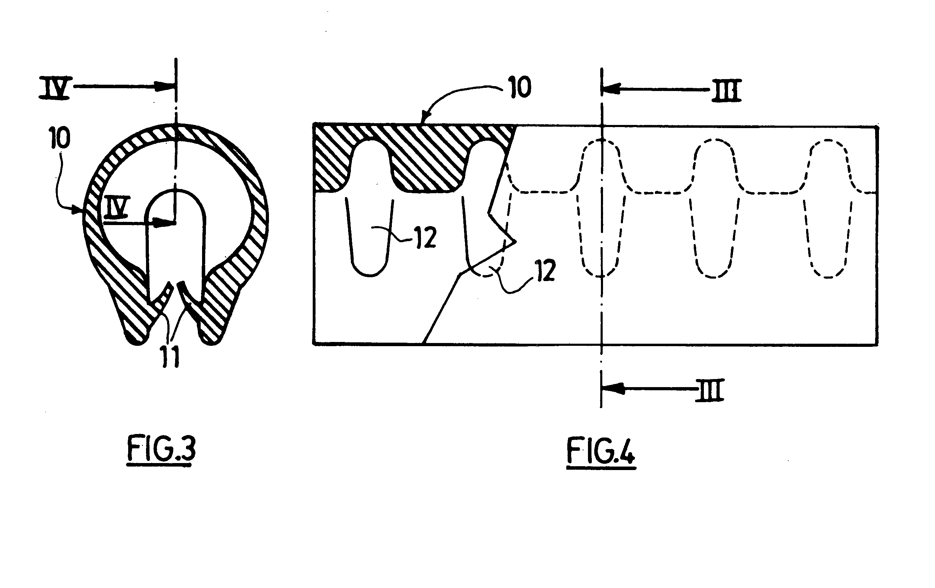

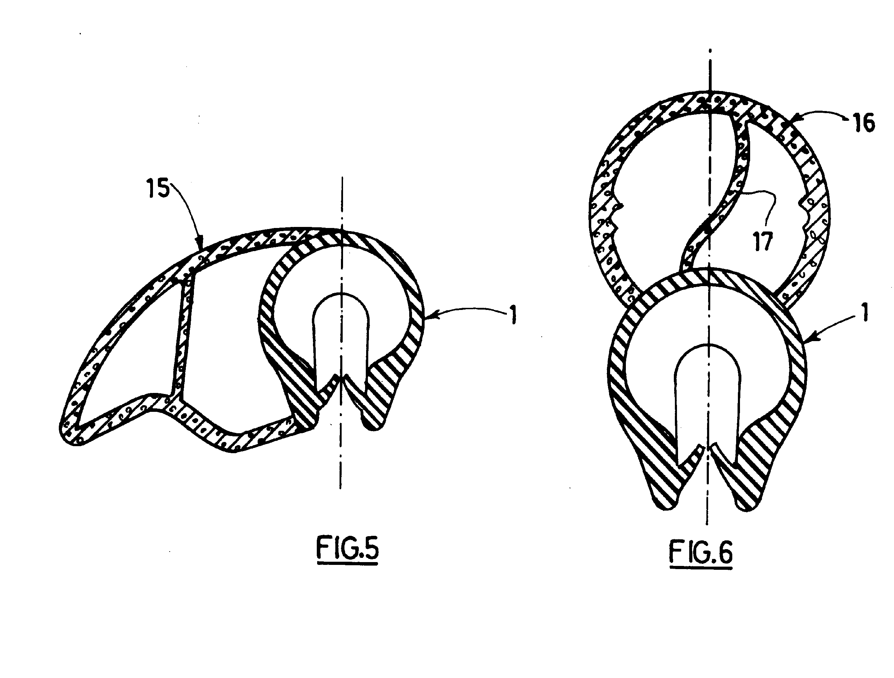

Le profilé 10 représenté sur les figures 3 et 4 est également un profilé en caoutchouc relativement dur, à section en forme de Ω, d'une dureté de l'ordre de 80 à 95 Shore A, comprenant des lèvres 11, destinées à faciliter son accrochage sur la partie saillante de la carrosserie d'automobile qu'il est destiné à coiffer. Ce profilé 10 est ici représenté sans couche extérieure d'un matériau différent coextrudé.

Il présente comme différence essentielle avec le profilé 1 précédemment décrit qu'au lieu de comporter une succession d'ondulations régulières, il présente une épaisseur sensiblement constante de l'ordre de 2 à 5 mm, interrompue à intervalles réguliers ou presque par des parties évidées 12, se traduisant par une diminution locale de l'épaisseur de la section, aussi bien sur la partie de l' Ω opposée aux extrémités des branches de celui-ci, que sur les parties contiguës de ces branches et même sur la plus grande partie de celles-ci.

Les motifs géométriques de cette forme de réalisation se répètent avec un pas assez régulier, ici moins important que celui des ondulations du profilé 1 précédemment décrit et, en fonction des dimensions du profilé, compris entre 3 et 10 mm, mais on obtient le même effet de rigidification du profilé sans armature et les mêmes avantages que précédemment.

Les joints d'étanchéité pour ouvrants d'automobile comprenant un profilé formant pince conforme à l'invention constituent un autre objet de cette invention.

C'est ainsi que la figure 5 illustre à titre d'exemple un joint d'étanchéité et d'insonorisation pour porte d'automobile, comprenant un profilé 1 formant pince du type illustré par les figures 3 et 4, à une branche latérale duquel est attenant latéralement un profilé bi-tubulaire 15, par exemple en caoutchouc cellulaire.

De façon analogue, la figure 6 illustre à titre d'exemple un joint d'étanchéité et d'insonorisation pour hayon arrière d'automobile, comprenant un joint formant pince selon les figures 3 et 4, à la base duquel est attenant en faisant saillie vers l'extérieur un profilé tubulaire 16, comportant une cloison transversale 17.

Ces réalisations ne sont données qu'à titre d'exemple.

## Revendications

1. Profilé extrudé formant pince en au moins un élastomère ou un plastomère, à section transversale en U ou en Ω, **caractérisé en ce qu'**il est dépourvu d'armature de renfort et **en ce que** sa surface externe ou, de préférence, interne présente, en coupe longitudinale, aussi bien à la base du U ou de l' Ω que sur au moins une partie des branches de celui-ci, une succession plus ou moins régulière d'ondulations (5) ou de motifs géométriques (12) se traduisant par une variation locale répétée de l'épaisseur de ce profilé.

2. Profilé selon la revendication 1, **caractérisé en ce qu'**il comporte des ondulations (5) se répétant avec un pas relativement constant compris entre 2 et 8 mm.

3. Profilé selon la revendication 1, **caractérisé en ce qu'**il présente une épaisseur sensiblement constante, interrompue à intervalles plus ou moins réguliers par des parties évidées (12) se traduisant par une diminution locale de l'épaisseur du profilé

4. Profilé selon la revendication 3, **caractérisé en ce que** les parties évidées 12 se répètent avec un pas relativement constant compris entre 3 et 10 mm.

5. Profilé selon l'une des revendications 1 à 4, **caractérisé en ce que** l'élastomère ou le plastomère dont il est constitué a une dureté comprise entre 75 et 95 Shore A.

6. Profilé selon l'une des revendications 1 à 5, **caractérisé en ce qu'**il comporte une couche externe 2 coextrudée en un matériau thermoplastique différent de celui constituant le profilé.

7. Profilé selon la revendication 6, **caractérisé en ce que** le matériau thermoplastique de la couche 2 a une dureté comprise entre 65 et 80 Shore A.

8. Joint d'étanchéité d'ouvrant d'automobile comprenant un profilé selon l'une des revendications 1 à 7.
